(19) Europäisches Patentamt
European Patent Office
Office européen des brevets

(11) EP 0 814 125 B1

(12) **EUROPEAN PATENT SPECIFICATION**

(45) Date of publication and mention
of the grant of the patent:
**24.11.2004 Bulletin 2004/48**

(51) Int Cl.[7]: **C08L 23/08**, C08L 29/04
// (C08L23/08, 77:00),
(C08L29/04, 77:00)

(21) Application number: **97109946.0**

(22) Date of filing: **18.06.1997**

(54) **Resin composition**

Harzzusammensetzung

Composition de résine

(84) Designated Contracting States:
**BE DE FR GB IT**

(30) Priority: **19.06.1996 JP 15792796**

(43) Date of publication of application:
**29.12.1997 Bulletin 1997/52**

(73) Proprietor: **KURARAY CO., LTD.**
**Kurashiki-City Okayama Prefecture 710 (JP)**

(72) Inventors:
• **Hiroyuki, Shimo**
**Kurashiki-City, Okayama-Pref. (JP)**
• **Nobuhiro, Hata**
**Kurashiki-City, Okayama-Pref. (JP)**

(74) Representative: **VOSSIUS & PARTNER**
**Siebertstrasse 4**
**81675 München (DE)**

(56) References cited:
**US-A- 4 828 915** **US-A- 5 068 077**

• **DATABASE WPI Section Ch, Week 9509 Derwent Publications Ltd., London, GB; Class A17, AN 95-063899 XP002055283 & JP 06 340 785 A (KURARAY CO LTD) , 13 December 1994**
• **DATABASE WPI Section Ch, Week 8917 Derwent Publications Ltd., London, GB; Class A18, AN 89-125340 XP002055284 & JP 01 069 653 A (KURARAY CO LTD) , 15 March 1989**

Remarks:
The file contains technical information submitted after the application was filed and not included in this specification

EP 0 814 125 B1

**Description**

The present invention relates to a resin composition based on an ethylene-vinyl alcohol copolymer (EVOH for short hereinafter), which upon heating can be readily stretched uniformly without cracking and exhibits good gas barrier properties.

Because of its good gas barrier properties, ethylene-vinyl alcohol copolymer finds general use as food packaging film to keep out oxygen and keep in odor or flavor. Unfortunately, it lacks toughness and moisture barrier properties when used alone.

Common practice to eliminate this disadvantage is to use it in the form of laminate with layers of thermoplastic resin (such as polyethylene, polypropylene, polystyrene, polyester, polyamide, and polyvinyl chloride) and adhesive resin (such as maleic anhydride grafted polyolefin). However, such a laminate (in the form of film, sheet, parison, etc.) encounters microvoids, cracks, and thickness variation in the EVOH layer during heat stretching (for conversion) because EVOH is poor in ductility and processability. The resulting films and containers are so poor in oxygen barrier property as well as appearance that they are not suitable for food packaging.

In the field of shrink packaging for raw meat or processed meat of irregular shape and varied size, the packaging film needs the property of shrinking sufficiently upon heating. Without tight shrinkage, the packaging film has wrinkles which look poor and give rise to pinholes. To ensure tight shrinkage it is necessary that the packaging film (before heat shrinking) be stretched in a high ratio. In addition, film for those foods such as raw meat, which are easily deteriorated by heat for shrinking, needs to shrink at a comparatively low temperature. Heat shrinkage at a low temperature takes place if film stretching is performed at a low temperature. A shrink film should ideally be capable of stretching in a high ratio at a low temperature.

When a packaging material with an EVOH layer is fabricated into containers by pressure forming, vacuum forming, or vacuum-pressure forming (which consists of heating stock film or sheet at 60-200° C and pressing it against a mold), there is an instance where the EVOH layer encounters microvoids, cracking, and thickness variation and the formed containers have extremely thinned corners.

A skin package film with an EVOH layer is also subject to streaking and wrinkling which aggravate the package appearance and give rise to pinholes detrimental to the quality of the content. Skin package consists of heating the film at 60-200° C, placing the heated film on a content (such as raw meat or processed meat) supported on a base sheet or tray under vacuum in a skin packaging machine, sealing the periphery of the film, and breaking the vacuum so that the film is pressed against the content and base under the atmospheric pressure, thereby achieving tight shrinkage to the content.

Some of packaging film and containers are made of vinylidene chloride resin or EVOH resin, both having good gas barrier properties. The former gives off a chlorine-containing gas at the time of incineration although it is superior in ductility. Therefore, it is not desirable from the environmental standpoint. The latter is inferior to the former in stretchability in a high ratio, although it is free of chlorine.

Several means have been proposed so far to overcome this disadvantage. They include incorporation of EVOH with a variety of plasticizers (Japanese Patent Laid-open Nos. 88067/1978, 283644/1986, JP-A-01069653 and 340785/1994) and blending EVOH with a polyamide resin (Japanese Patent Laid-open Nos. 141785/1977, 154755/1983, and 36412/1983). However, they have been found to be unsatisfactory as mentioned below.

In the first case, it is necessary to add 10-20 parts by weight of polyhydric alcohol plasticizer on the basis of 100 parts by weight of EVOH in order to improve stretchability substantially. The result is a serious deterioration in gas barrier properties and a decrease in adhesion strength between the EVOH layer and the adhesive layers.

In the second case of blending EVOH with polyamide resin, the resulting container has a good appearance but loses uniform gas barrier properties at the time of stretching, presumably because of micro cracking and irregular thickness distribution. Therefore, it has a problem with product reliability.

One way to improve the stretchability of multilayer EVOH film is by lamination of EVOH layer with a PA resin layer. The laminate, however, is not necessarily satisfactory in stretchability.

In the meantime, Japanese Patent Laid-open Nos. 261815/1993 and 270346/1994 disclose a resin composition composed of EVOH and a hydrophobic plasticizer, and Japanese Patent Laid-open No. 200865/1993 discloses a resin composition composed of two or more grades of EVOH (differing in ethylene content and/or the degree of saponification) and a hydrophobic plasticizer, both compositions are claimed to have good stretchability.

However, these compositions are not necessarily satisfactory in stretchability, heat shrinkage, and gas barrier properties, as demonstrated in Comparative Examples 5, 6, and 9 given later. Incidentally, these disclosures add that it is permissible to blend EVOH with a polyamide resin or the like in an amount not harmful to the object of the invention. However, nothing is mentioned clearly about the object and the amount of blending.

For the reasons mentioned above, there is a demand for film and containers superior in gas barrier properties and stretchability. It is an object of the present invention to provide an EVOH composition superior in stretchability and gas barrier properties and capable of stretching without cracking and variation in thickness.

The EVOH composition to achieve the object of the present invention comprises (A) an ethylene-vinyl alcohol copolymer having an ethylene content of 20-70 mol%, (B) a polyamide resin, and (C) a hydrophobic plasticizer selected from aromatic ester, aliphatic ester and an epoxy compound, which satisfies the condition specified by equation (1) below, with the amounts of components (A), (B), and (C) being 55-97 parts by weight, 3-45 parts by weight, and 0.1-30 parts by weight, respectively, on the basis of 100 parts by weight of the total amount of components(A) and (B).

$$15 \leq \{CH(A)\}^{1/2} + SP(C) \leq 22 \qquad (1)$$

where CH(A) denotes the ethylene content (mol%) of the ethylene-vinyl alcohol copolymer as component (A), and SP (C) denotes the solubility parameter of the hydrophobic plasticizer as component(C), which is calculated from Fedors equation.

In a preferred embodiment, the polyamide resin as component (B) is one in which the ratio $CH_2$/NHCO (where $CH_2$ is the number of $CH_2$ groups and NHCO is the number of NHCO groups) satisfies equation (2) below, and it is particularly nylon 6/12.

$$4 \leq CH_2/NHCO \leq 8 \qquad (2)$$

The ethylene-vinyl alcohol copolymer as component (A) contains a phosphate compound in an amount of 5-500 ppm (in terms of phosphate radicals) and/or an alkali metal salt or an alkaline earth metal salt in an amount of 10-500 ppm (in terms of metal ions).

The present inventors prepared various kinds of multilayer films and sheets, each consisting of layers of a resin composition (a blend of EVOH with a variety of plasticizers and resins), an adhesive resin, and a thermoplastic resin. Then they performed biaxial orientation by heating on them and tested the oriented products for appearance, gas barrier properties, and heat shrinkage, and evaluated thermoformed containers produced from them.

The test results revealed the following. A sample of multilayer film containing EVOH blended with 5-20 wt% of polyhydric alcohol plasticizer (which is commonly used for EVOH) is improved in heat stretchability but is extremely poor in gas barrier properties for practical use, especially under high humidity (90 %RH and above). On the other hand, a sample of multilayer film containing EVOH blended with a hydrophobic plasticizer (which is commonly used for polyolefins and polyvinyl chloride) is not so improved in heat stretchability unless the plasticizer is added in a large amount. A large amount of plasticizer has an adverse effect on gas barrier properties. Likewise, a sample of multilayer film containing EVOH blended with a polyamide is not so improved in heat stretchability unless the polyamide is added in a large amount. A large amount of polyamide has an adverse effect on gas barrier properties.

After their extensive studies, the present inventors unexpectedly found that the multilayer film is greatly improved in stretchability with a small loss in gas barrier properties if the EVOH layer is formed from an EVOH composition incorporated with a hydrophobic plasticizer having a specific solubility parameter (SP value for short hereinafter) and a polyamide resin in a specific amount. The reason for this significant improvement is not fully understood. Presumably, the combined use of hydrophobic plasticizer and polyamide resin produces a synergistic effect of improving stretchability with a minimum of adverse effect on the gas barrier properties of EVOH.

In general, when blending EVOH with the hydrophobic plasticizer with high SP value, stretchability of EVOH is improved but its gas barrier properties are greatly aggravated due to plasticization of EVOH. Conversely, when the plasticizer with low SP value is blended, its gas barrier properties are not so aggravated but its stretchability is not greatly improved.

The solubility parameter as used herein is the value calculated from Fedors equation mentioned in "Polymer Engineering and Science", vol. 14, No. 2, 1974, pp. 147-154.

EVOH used as component (A) in the present invention is a saponified product of ethylene-vinyl ester copolymer. It is characterized by its ethylene content, the lower limit of which is 20 mol%, preferably 25 mol%, more preferably 30 mol%, much more preferably 35 mol%, and most desirably 40 mol%, and the upper limit of which is 70 mol%, preferably 60 mol%, more preferably 55 mol%, and most desirably 50 mol%. Moreover, it is characterized by the degree of saponification of the vinyl ester moiety, which should preferably be higher than 85%, more preferably higher than 90%, and most preferably higher than 95%. A sample with an ethylene content lower than 20 mol% is poor in processability and thermal stability. A sample with an ethylene content higher than 70 mol% is poor in gas barrier properties. In addition, a sample with a degree of saponification lower than 85% is poor in gas barrier properties and thermal stability.

The adequate range of ethylene content varies depending on applications. If the resin composition is to be used for heat shrinkable film (as one of its suitable applications), the adequate ethylene content is rather high, ranging from 40 to 55 mol%, because it needs a high degree of stretchability and shrinkage and good gas barrier properties at high humidity. If the resin composition is to be used for thermoforming film or sheet, the adequate ethylene content is rather low, ranging from 30 to 50 mol%, because it needs good gas barrier properties at low humidity although it does not need a high degree of stretchability.

The EVOH used in the present invention is produced from ethylene and a vinyl ester which is typically vinyl acetate or any other fatty acid vinyl ester (such as vinyl propionate and vinyl pivalate). The EVOH may contain a vinylsilane compound (as a comonomer) in an amount of 0.0002-0.2 mol%. Examples of the vinylsilane compound include vinyltrimethoxysilane, vinyltriethoxysilane, vinyltri (β-methoxyethoxy)silane, and γ-methacryloxy-propylmethoxysilane. The first two examples are particularly desirable. Moreover, the EVOH may be copolymerized with other comonomers (such as propylene, butylene, unsaturated carboxylic acid and esters thereof (e.g., (meth)acrylic acid and (meth)acrylate ester), and N-vinylpyrrolidone) in an amount not harmful to the effect of the present invention.

According to a preferred embodiment of the present invention, the EVOH as component (A) may be incorporated with a phosphate compound for improvement in heat stretchability. The amount of the phosphate compound (in terms of phosphate radical) is preferably 5-500 ppm, more preferably 10-300 ppm, and most preferably 20-200 ppm. By phosphate compound is meant any compound containing $H_3PO_4$, $H_2PO_4^-$, $HPO_4^{2-}$, or $PO_4^{3-}$. It is exemplified by phosphoric acid, sodium dihydrogenphosphate, and disodium hydrogenphosphate.

According to another preferred embodiment of the present invention, the EVOH as component (A) may also be incorporated with an alkali metal salt or alkaline earth metal salt for improvement in heat stretchability. The amount of such salts (in terms of metal ions) is preferably 10-500 ppm, more preferably 20-400 ppm, and most preferably 30-400 ppm. Their nonlimitative examples include sodium salt (such as disodium hydrogenphosphate and sodium hydrogensulfite), potassium salt (such as potassium dihydrogenphosphate and potassium acetate), and calcium salt (such as calcium acetate and sodium hydrogensulfite).

A better improvement in heat stretchability is achieved when the phosphate compound and the alkali metal salt or alkaline earth metal salt are used in combination rather than used alone.

The EVOH used in the present invention should preferably have an adequate melt index (MI) in the range of 0.1 to 50 g/10 min, most desirably 0.5 to 20 g/10 min, measured at 190°C under a load of 2160 g. In the case of samples having a melting point in the neighborhood of 190° C or higher than 190° C, the melt index is obtained by carrying out measurements at several temperatures above the melting point under a load of 2160 g, plotting the measured values on a semilogarithmic graph (with MI on the logarithmic vertical axis and the reciprocal of absolute temperature on the horizontal axis), and extrapolating the resulting curve at 190C°.

The polyamide resin as component (B) in the present invention is a polymer which has the amide group. Examples of the polyamide are listed below.

- Aliphatic nylon homopolymers, such as polycaproamide (nylon 6), polyundecaneamide (nylon 11), polylauryllactam (nylon 12), polyhexamethyleneadipamide (nylon 6,6), and polyhexamethylenecebacamide (nylon 6,12).
- Aliphatic nylon copolymers, such as caprolactam-lauryllactam copolymer (nylon 6/12), caprolactam-aminoundecanoic acid copolymer (nylon 6/11), caprolactam-caprolactamω-aminononanoic acid copolymer (nylon 6/9), caprolactam-hexamethyleneadipamide copolymer (nylon 6/6,6), and caprolactam-hexamethyleneadipamide-hexamethylenecebacamide copolymer (nylon 6/6, 6/6, 12).
- Partially aromatic nylon, such as polymer of adipic acid and metaxylenediamine and copolymer of hexamethylenediamine and m-and p-phthalic acid.

These polyamide resins may be used alone or in combination with one another. Improvement in the stretchability of EVOH is best achieved by selecting from these polyamide resins as component (B) a caproamide-containing polyamide (such as nylon 6,12, nylon 6/12, and nylon 6/6,6) and partially aromatic nylon. The former is preferable, and nylon 6/12 is most desirable.

According to the present invention, the polyamide resin as component (B) should preferably contain $CH_2$ groups and NHCO groups such that their ratio ($CH_2$/NHCO) satisfies equation (2) below, more preferably equation (2') below.

$$4 \leq CH_2/NHCO \leq 8 \tag{2}$$

$$4.5 \leq CH_2/NHCO \leq 7.5 \tag{2'}$$

With a ratio smaller than 4, the resin composition is poor in thermal stability when the polyamide resin is blended with EVOH; with a ratio greater than 8, the resin composition is poor in stretchability.

It is important that the amount of the polyamide resin as component (B) should be 3-45 parts by weight on the basis of 100 parts by weight of the total amount of components (A) and (B). With an amount less than 3 parts by weight or more than 45 parts by weight, the resin composition is not satisfactory in both stretchability and gas barrier properties, as demonstrated in Comparative Examples 3, 4, and 10 given later. The lower limit is 3 parts by weight, preferably 5 parts by weight, more preferably 10 parts by weight, and most desirably 15 parts by weight. The upper limit is 45 parts by weight, preferably 35 parts by weight, more preferably 30 parts by weight, and most desirably 25 parts by weight.

The resin composition of the present invention contains as component (C) a hydrophobic plasticizer which satisfies the condition specified by formula (1) below.

$$15 \leq \{CH(A)\}^{1/2} + SP(C) \leq 22 \qquad (1)$$

where CH(A) denotes the ethylene content (mol%) in the ethylene-vinyl alcohol copolymer as component (A), and SP (C) denotes the solubility parameter of the hydrophobic plasticizer as component (C)

If the value of equation (1) is less than 15, the hydrophobic plasticizer as component (C) is poor in compatibility with EVOH and is liable to phase separation which makes the resin composition opaque and presents difficulties in melt extrusion. If the value of equation (1) is greater than 22, the EVOH-containing resin composition is poor in gas barrier properties. This is demonstrated in Comparative Examples 7 and 8 given later. In a preferred embodiment of the present invention, equation (1') below is applied to the hydrophobic plasticizer as component (C).

$$15.5 \leq \{CH(A)\}^{1/2} + SP(C) \leq 20.5 \qquad (1')$$

The resin composition of the present invention may contain two or more grades of EVOH differing in ethylene content, the degree of saponification, and MI. In this case the ethylene content of the resin composition is expressed in terms of average of individual ethylene contents.

The hydrophobic plasticizer as component (C) is an aromatic ester, aliphatic esther, or an epoxy compound thereof, examples of which are listed in the following.

- Aromatic ester: dibutyl phthalate, dioctyl phthalate, diheptyl phthalate, bis(2-ethylhexyl) phthalate, dicyclohexyl phthalate, butyl lauryl phthalate, diisooctyl phthalate, butylcoconutalkyl phthalate, ditridecyl phthalate, dilauryl phthalate, diisodecyl phthalate, butylbenzyl phthalate, octyldecanoyl phthalate, dimethylglycol phthalate, ethylphthalyl ethylene glycolate, methylphthalyl ethylene glycolate, butylphthalyl ethylene glycolate, dinonyl phthalate, diheptyl phthalate, octyldecyl phthalate, ditridecyl phthalate, dicapryl phthalate, bis(3,5,5-trimethylhexyl) phthalate, isooctylisodecyl phthalate, bis(diethyleneglycolmonomethylether) phthalate, and benzphenol.
- Aliphatic ester (in the form of mono-, di-, or polyester of higher fatty acid (having 8 or more carbons, preferably 8-30 carbons) with di-, tri-, or polyhydric alcohol): glycerin monostearate, glycerin 12-hydroxy stearate, glycerin distearate, diglycerin monostearate, tetraglycerin monostearate, glycerin monolaurate, diglycerin monolaurate, tetraglycerin monolaurate, polypropylene adipate, diisodecyl adipate, bis(2-methylhexyl) adipate, dicapryl adipate, diisooctyl adipate, octyldecyl adipate, isooctylisodecyl adipate, dibutyl fumarate, dioctyl fumarate, triethyl citrate, acetyltriethyl citrate, tributyl citrate, and acetyltributyl citrate.
- Epoxy compound: butylepoxy stearate, octylepoxy stearate, epoxybutyl oleate, epoxidized butyl oleate, epoxidized soybean oil, epoxidized linseed oil, epoxidized alkyl oil, and epoxidized alkyl oil alcohol ester.

The hydrophobic plasticizers exemplified above as component (C) may be used in combination with one another.

- Preferred aromatic esters: butylbenzyl phthalate, dibutyl phthalate, diethyl phthalate, bis(2-ethylhexyl) phthalate, diheptyl phthalate,_and benzophenol.
- Preferred aliphatic esters: glycerin monostearate, glycerin mono-12-hydroxystearate, diglycerin monostearate, tetraglycerin monostearate, glycerin monolaurate, diglycerin monolaurate, and tetraglycerin monolaurate.
- Preferred epoxidized compounds: epoxidized soybean oil and epoxidized linseed oil.

The amount of hydrophobic plasticizer as component (C), which is determined on the basis of 100 parts by weight of the total amount of components (A) and (B), should be such that the lower limit is 0.1 parts by weight, preferably 1 parts by weight, more preferably 2 parts by weight, and most desirably 3 parts by weight, and the upper limit is 30 parts by weight, preferably 20 parts by weight, more preferably 15 parts by weight, and most desirable 10 parts by weight.

There are no specific restrictions on the method of mixing the EVOH, polyamide resin, and hydrophobic plasticizer as components (A), (B), and (C), respectively. A first method consists of dry-blending the polyamide resin as component (B) and the hydrophobic plasticizer as component (C), melting the dry blend and pelletizing the melt after cooling, dry blending the pellets with the EVOH as component (A), melting the dry blend using a Banbury mixer or single- or twin-screw extruder, and pelletizing the melt. The resulting pellets are finally dried. A second method consists of dry blending the EVOH as component (A), the polyamide resin as component (B), and the hydrophobic plasticizer as component (C) all at once, melting the dry blend and pelletizing the melt after cooling. The resulting pellets are finally dried. Blending should be uniform and pelletizing should be carried out in such a manner as to avoid gels and hard spots (which cause breaking, cracking, and thickness variation to the EVOH layer during heat stretching). This object is achieved by using a high-mixing extruder, performing extrusion at a low temperature, and sealing the hopper with nitrogen.

According to the present invention, the resin composition composed of the EVOH as component (A), the polyamide resin as component (B), and the hydrophobic plasticizer as component (C) should preferably have a melt index (MI) of 0.1 g/10 min, more preferably 0.5 g/10 min, and most desirably 1 g/10 min, measured at 190° C under a load of 2160 g. The upper limit of MI should preferably be 20 g/10 min, more preferably 15 g/10 min, and most desirably 10 g/10 min. In the case of samples having a melting point in the neighborhood of 190°C or higher than 190°C, the melt index is obtained by carrying out measurements at several temperatures above the melting point under a load of 2160 g, plotting the measured values on a semilogarithmic graph (with MI on the logarithmic vertical axis and the reciprocal of absolute temperature on the horizontal axis), and extrapolating the resulting curve at 190° C.

At the time of blending, the resin composition may be incorporated with additives (such as heat stabilizer, UV light absorber, antioxidant, coloring agent, and filler) and other resins in an amount not harmful to the effect of the present invention. To suppress thermally decomposed gels, it is recommended to add hydrotalcite, hindered phenol, hindered amine, and metal salt of higher aliphatic carboxylic acid (e.g., calcium stearate and magnesium stearate), alone or in combination, in an amount of 0.01-1 wt%.

The resin composition composed of the EVOH as component (A), the polyamide resin as component (B), and the hydrophobic plasticizer as component (C) according to the present invention will preferably be used to form one layer of multilayer structure. This layer is laminated with layers of thermoplastic resin exemplified by polyethylene (of high density, medium density, or low density), polyethylene copolymer (with vinyl acetate, acrylate ester, or such $\alpha$-olefin as butene and hexene), polvinyl acetate resin, ionomer resin, polypropylene homopolymer, polypropylene copolymer (with such $\alpha$-olefin as ethylene, butene, and hexene), and modified polyolefin (formed by grafting said polyolefin with maleic anhydride or the like). The layer of polyolefin (as a thermoplastic resin) may be crosslinked by irradiation (with electron beams or the like) or by the aid of crosslinking agent added at the time of extrusion, so as to improve the stretchability. Additional examples of the thermoplastic resin include polyamide resin, polyester resin, polystyrene resin, polyvinyl chloride resin, acrylic resin, polyurethane resin, and polycarbonate resin.

An adhesive resin layer may be interposed between the layer of the resin composition of the present invention and the layer of the thermoplastic resin. The adhesive resin should preferably be an olefin polymer or copolymer (such as linear low-density polyethylene (LLDPE), ultra-low-density polyethylene (ULDPE), ethylene-vinyl acetate copolymer, ethylene-(meth)acrylate ester copolymer) grafted with an unsaturated carboxylic acid or anhydride thereof (such as maleic anhydride).

The multilayer structure may be obtained by extrusion lamination, dry lamination, coextrusion lamination, coextrusion sheet molding, coextrusion pipe molding, coinjection molding, solution coating, or the like, with the adhesive resin interposed between the layer of the resin composition of the present invention and the layer of the thermoplastic resin.

The multilayer structure is not specifically limited in layer thickness. For good processability and moderate production cost, it is desirable that the layer of the resin composition of the present invention accounts for 2-20% of the total thickness. Layers constituting the multilayer structure may typically be arranged in the order shown below, where layers are indicated by R, T, and A representing respectively the resin composition, the thermoplastic resin, and the adhesive resin.

T/R/T, R/A/T, and T/A/R/A/T

In the first case, the outer layers may be formed from thermoplastic resins of the same or different kind. The thermoplastic resin may be incorporated with scraps generated from trimming. Alternatively, it is possible to form an additional layer from scraps.

The term "heat stretching" as used in the present invention means any procedure for forming, after heating, the multilayer structure into films or containers by tentering or air force. The stretching may be accomplished in one direction or in two directions (sequentially or simultaneously). The heating may be carried out simultaneously with or prior to the stretching. Heating method is not specifically restricted so long as it is capable of keeping the multilayer structure for a certain period of time at a temperature suitable for stretching. Heating with a heater of any kind may be desirable for easy operation. The ratio and rate of stretching may be properly established according to the object.

At the time of stretching, the layer of the EVOH-containing resin composition should contain an adequate amount of water ranging from 0.01 to 10 wt%. The water content should preferably be as high as possible so long as no foaming occurs in the layer of the resin composition.

The multilayer structure containing the resin composition of the present invention may be used as a heat-shrinkable film which is superior in stretchability and heat-shrinkability and gas barrier properties and consequently provides no local stretch variation (which would otherwise occur during stretching) and no wrinkles (which would otherwise occur after shrinking). This is a great advantage because heat-shrinkable film is usually subject to uneven stretching during production and, after heat shrinkage, this uneven stretching causes wrinkles which lead to pin-holes.

The multilayer film obtained in this manner is superior particularly in heat shrinkability at low temperatures (70-85°C). It should have a shrinkage in area (after dipping in hot water (80°C) for 1 minute) greater than 10%, preferably 20%, more preferably 25%, much more preferably 30%, and most desirably 40%. With a shrinkage in area smaller than 10%, the shrunk film has wrinkles and hence is poor in tight shrinkage to the contents and also in appearance. In addition, these wrinkles tend to cause pin-holes. The shrinkable film with a shrinkage in area greater than 30%, especially greater than 40%, is suitable for raw meat packaging.

The multilayer structure containing the resin composition of the present invention may be used as a thermoforming film or sheet which is superior in stretchability and gas barrier properties and is capable of forming into containers without extreme thinning at corners while keeping the EVOH layer free from microvoids, cracks, and thickness variation.

The multilayer structure containing the resin composition of the present invention may be used as skin packaging film which shrinks tight on the content placed on a support without causing streaking and wrinkling (which lead to poor appearance and pin-holes) and hence is superior in gas barrier properties and adhesion to the contents.

The invention will be described in more detail with reference to the following examples.

Analysis in trace amounts in the EVOH resin were determined as follows.

(1) Determination of phosphate radicals:

A dry sample of EVOH (10 g) is put into 50 ml of 0.01N aqueous solution of hydrochloric acid at 95° C with stirring for 6 hours. The resulting solution is analyzed by ion chromatography which employs as the column "CIS-A23" made by Yokogawa Denki K.K. and as the eluent an aqueous solution containing sodium carbonate (2.5 mM) and sodium hydrogen carbonate (1.0 mM). The calibration curve for determination is prepared from an aqueous solution of phosphoric acid. The content of phosphate radicals is expressed in terms of phosphoric ions ($PO_4^{3-}$).

(2) Determination of alkali metal ions and alkaline earth metal ions:

A dry sample of EVOH (10 g) is put into 50 ml of 0.01N aqueous solution of hydrochloric acid at 95° C with stirring for 6 hours. The resulting solution is analyzed by ion chromatography which employs as the column "CIS-C25" made by Yokogawa Denki K.K. and as the eluent an aqueous solution containing tartaric acid (5.0 mM) and 2,6-pyridinedicarboxylic acid (1.0 mM). The calibration curve for determination is prepared from aqueous solutions of various metal chlorides (such as NaCl).

Example 1

A resin composition of the present invention was prepared from the following three components by extrusion at 200° C through a twin-screw vented extruder (40 mm in diameter) in a nitrogen atmosphere, followed by pelletization.

Component (A): 85 parts by weight of EVOH containing phosphoric acid (90 ppm in terms of phosphate radicals), sodium acetate (80 ppm in terms of sodium ions), and 48 mol% of ethylene content, characterized by a degree of saponification of 99.6% and a melt index of 6.4 g/10 min (measured at 190° C under a load of 2160 g).
Component (B): 15 parts by weight of nylon 6/12 (composed of comonomers in a weight ratio of 50/50), "Grilon CF6S" made by EMS.
Component (C): 4 parts by weight of tetraglycerin monolaurate (TGML) having a solubility parameter (SP) of 12, "SY Glystar ML-300" made by Sakamoto Yakuhin.

The resulting pellets had an MI of 7.5 g/10 min (measured at 190°C under a load of 2160 g).

Using a coextrusion equipment (for 3 materials and 5 layers), the resin composition was formed into a multilayer sheet constructed of five layers of ionomer resin, adhesive resin, EVOH resin composition, adhesive resin, and ionomer resin, arranged in the order mentioned. The outer ionomer layers are 250 μm thick each, the adhesive resin layers are 30 μm thick each, and the EVOH resin composition layer is 90 μm thick. The ionomer is "Himiran 1652" made by Mitsui DuPont Polychemical, Ltd., and the adhesive resin is "Admer NF500" made by Mitsui Petrochemical Industries, Ltd.

The resulting multilayer sheet underwent simultaneous biaxial orientation (4 times in both directions) at 60°C on a biaxial stretching machine of pantograph type. The resulting stretched film was examined for appearance and rated as "A" according to the following criterion.

    A : uniform appearance, without local thickness variation.
    B : slightly uneven appearance, without local thickness variation.
    C : slightly uneven appearance, with slight local thickness variation.
    D : uneven appearance, with considerable local thickness variation.
    E : broken.

(Those samples rated as "E" were not tested for heat shrinkage and gas barrier properties.)

After conditioning at 20°C and 100 %RH for 5 days, the stretched film was measured for oxygen permeability using Model 10/50 made by Modern Control Co., Ltd.. Measurements of five samples gave a value of 80 cc/m$^2$·day·atm without variation, which suggests good gas barrier properties.

The stretched film was tested for heat shrinkage by dipping in hot water at 80°C for 1 minute. It gave 51% shrinkage in area. (The shrinkage in area is defined as $\{(X - Y)/X\} \times 100$ (%) , where X is the area of the film before shrinkage and Y is the area of the film after shrinkage.

A bag was made from the stretched film by folding it in half and heat-sealing both sides. The bag was heat-sealed under vacuum, with a piece of raw meat placed therein. The vacuum-packed bag was dipped in hot water at 80° C for 10 seconds to shrink the film. The bag tightly shrank to the raw meat without wrinkling. The resulting shrunk bag was rated as "A" according to the following criterion.

    A : no wrinkle.
    B : small wrinkles.
    C : large wrinkles.

Table 1 shows the components of the resin composition and the results of evaluation of film samples.

Examples 2 to 8

The same procedure as in Example 1 was repeated except that the components of the resin composition were changed as shown below. Table 1 shows the components of the resin composition and the results of evaluation of film samples.

[Example 2]

    Component (A): 85 parts by weight of EVOH containing phosphoric acid (3 ppm in terms of phosphate radicals), sodium acetate (120 ppm in terms of sodium ions), and 48 mol% of ethylene content, characterized by a degree of saponification of 99.7% and a melt index of 6.4 g/10 min (measured at 190°C under a load of 2160 g).
    Component (B): 15 parts by weight of the same nylon 6/12 as used in Example 1.
    Component (C): 4 parts by weight of the same TGML as used in Example 1.

[Example 3]

    Component (A): 85 parts by weight of EVOH containing phosphoric acid (80 ppm in terms of phosphate radicals), sodium acetate (5 ppm in terms of sodium ions), and 48 mol% of ethylene content, characterized by a degree of saponification of 99.7% and a melt index of 6.4 g/10 min (measured at 190°C under a load of 2160 g).
    Component (B): 15 parts by weight of the same nylon 6/12 as used in Example 1.
    Component (C): 4 parts by weight of the same TGML as used in Example 1.

[Reference Example 4]

Component (A): 85 parts by weight of EVOH containing phosphoric acid (3 ppm in terms of phosphate radicals), sodium acetate (5 ppm in terms of sodium ions), and 48 mol% of ethylene content, characterized by a degree of saponification of 99.7% and a melt index of 6.4 g/10 min (measured at 190°C under a load of 2160 g).
Component (B): 15 parts by weight of the same nylon 6/12 as used in Example 1.
Component (C): 4 parts by weight of the same TGML as used in Example 1.

[Example 5]

Component (A): 80 parts by weight of the same EVOH as used in Example 1.
Component (B): 20 parts by weight of the same nylon 6/12 as used in Example 1.
Component (C): 5 parts by weight of glycerin monolaurate (GML, "Poem M-300" made by Riken Vitamin, having an SP value of 10.9).

[Example 6]

Component (A): 85 parts by weight of the same EVOH as used in Example 1.
Component (B): 15 parts by weight of nylon 6 ("Amiran CM100", made by Toray Industries, Inc.)
Component (C): 4 parts by weight of the same TGML as used in Example 1.

[Example 7]

Component (A): 80 parts by weight of EVOH containing phosphoric acid (90 ppm in terms of phosphate radicals), sodium acetate (80 ppm in terms of sodium ions), and 44 mol% of ethylene content, characterized by a degree of saponification of 99.7% and a melt index of 5.5 g/10 min (measured at 190°C under a load of 2160 g).
Component (B): 20 parts by weight of nylon 6/12 (composed of comonomers in a weight ratio of 90/10), "Grilon CR-9″ made by EMS.
Component (C): 5 parts by weight of the same GML as used in Example 5.

[Example 8]

Component (A): 70 parts by weight of EVOH containing phosphoric acid (90 ppm in terms of phosphate radicals), sodium acetate (80 ppm in terms of sodium ions), and 38 mol% of ethylene content, characterized by a degree of saponification of 99.7% and a melt index of 1.6 g/10 min (measured at 190° C under a load of 2160 g).
Component (B): 30 parts by weight of the same nylon 6 as used in Example 6.
Component (C): 5 parts by weight of glycerin monostearate (GMS, "Monogly D", having an SP value of 10.3, made by Nippon Oil and Fats Co., Ltd.)

Comparative Examples 1 to 10

The same procedure as in Example 1 was repeated except that the components of the resin composition were changed as shown below. Table 1 shows the components of the resin composition and the results of evaluation of film samples.

[Comparative Example 1]

Component (A): 100 parts by weight of the same EVOH as used in Example 1.
Component (B): not used.
Component (C): not used.

[Comparative Example 2]

Component (A): 80 parts by weight of the same EVOH as used in Example 7.
Component (B): 20 parts by weight of the same nylon 6/12 as used in Example 1.
Component (C): not used.

[Comparative Example 3]

Component (A): 98 parts by weight of the same EVOH as used in Example 1.
Component (B): 2 parts by weight of the same nylon 6 as used in Example 6.
Component (C): 5 parts by weight of diethyl phthalate (DEP, having an SP value of 11.1, made by Kyowa Hakko Kogyo Co., Ltd.)

[Comparative Example 4]

Component (A): 50 parts by weight of the same EVOH as used in Example 7.
Component (B): 50 parts by weight of the same nylon 6 as used in Example 6.
Component (C): 5 parts by weight of the same GML as used in Example 5.

[Comparative Example 5]

Component (A): 100 parts by weight of a mixture of 80 parts by weight of the same EVOH as used in Example 1 and 20 parts by weight of EVOH containing phosphoric acid (90 ppm in terms of phosphate radicals), sodium acetate (80 ppm in terms of sodium ions), and 44 mol% of ethylene content, characterized by a degree of saponification of 96.5% and a melt index of 4.4 g/10 min (measured at 190° C under a load of 2160 g). The average ethylene content of the mixture is 47.2 mol%.
Component (B): not used.
Component (C): 5 parts by weight of the same GMS as used in Example 8.

[Comparative Example 6]

Component (A): 100 parts by weight of a mixture of 50 parts by weight of the same EVOH as used in Example 1 and 50 parts by weight of EVOH containing phosphoric acid (90 ppm in terms of phosphate radicals), sodium acetate (80 ppm in terms of sodium ions), and 44 mol% of ethylene content, characterized by a degree of saponification of 96.5% and a melt index of 4.4 g/10 min (measured at 190°C under a load of 2160 g). The average ethylene content of the mixture is 46 mol%.
Component (B): not used.
Component (C): 5 parts by weight of the same GMS as used in Example 8.

[Comparative Example 7]

Component (A): 80 parts by weight of the same EVOH as used in Example 1.
Component (B): 20 parts by weight of the same nylon 6/12 as used in Example 1.
Component (C): 5 parts by weight of glycerin (GLR, having an SP value of 16.4, made by Nippon Oil and Fats Co., Ltd.)

[Comparative Example 8]

Component (A): 80 parts by weight of EVOH containing phosphoric acid (90 ppm in terms of phosphate radicals), sodium acetate (80 ppm in terms of sodium ions), and 32 mol% of ethylene content, characterized by a degree of saponification of 99.7% and a melt index of 1.4 g/10 min (measured at 190°C under a load of 2160 g).
Component (B): 20 parts by weight of the same nylon 6/12 as used Example 7.
Component (C): 5 parts by weight of glycerin tristearate (GTS, having an SP value of 9.1, "Rikemal S-95" made by Riken Vitamin)

[Comparative Example 9]

Component (A): 100 parts by weight of the same EVOH as used in Example 8.
Component (B): not used.
Component (C): 5 parts by weight of the same DEP as used in Comparative Example 3.

[Comparative Example 10]

Component (A): 98 parts by weight of the same EVOH mixture as used in Comparative Example 5.
Component (B): 2 parts by weight of the same nylon 6 as used in Example 6.
Component (C): 5 parts by weight of the same GMS as used in Example 5.

[Table 1]

Example 9

A resin composition of the present invention was prepared from the following three components by extrusion at 200°C through a twin-screw vented extruder (40 mm in diameter) in a nitrogen atmosphere, followed by pelletization.

Component (A): 85 parts by weight of EVOH containing phosphoric acid (70 ppm in terms of phosphate radicals), sodium acetate (130 ppm in terms of sodium ions), and 32 mol% of ethylene content, characterized by a degree of saponification of 99.7% and a melt index of 1.3 g/10 min (measured at 190° C under a load of 2160 g).
Component (B): 15 parts by weight of nylon 6/12 (composed of comonomers in a weight ratio of 90/10), "Grilon CR-9" made by EMS.
Component (C): 4 parts by weight of glycerin monolaurate (GML) having an SP value of 10.9, "Poem M-300" made by Riken Vitamin.

The resulting pellets had an MI of 1.5 g/10 min (measured at 190°C under a load of 2160 g).
Using a coextrusion equipment (for 3 materials and 5 layers), the resin composition was formed into a multilayer film constructed of five layers of nylon 6 resin, adhesive resin, EVOH resin composition, adhesive resin, and LLDPE resin, arranged in the order mentioned. The outer nylon layer is 10 μm thick, the adhesive resin layers are 10 μm thick each, the EVOH resin composition layer is 20 μm thick, and the inner LLDPE resin layer is 60 μm thick. The nylon resin is "Ube Nylon 1022B" made by Ube Industries, Ltd., the adhesive resin is "Admer NF500" made by Mitsui Petrochemical Industries, Ltd., and the LLDPE is "Ultzex 3520L" made by Mitsui Petrochemical Industries, Ltd.

The resulting multilayer film was measured for oxygen permeability using Model 10/50 made by Modern Control Co., Ltd. after conditioning at 20°C and 65 %RH for 2 weeks. There was obtained a value of 0.6 cc/m$^2$·day·atm, which suggests good gas barrier properties.

The resulting multilayer film was formed into containers by thermoforming under the following conditions using a thermoforming machine, Model R530 made by Multivac Co., Ltd. Pressure: 5 kgf/cm$^2$ by compressed air. Heating: at 100°C (mold temperature) for 2 seconds. Mold: 130 mm long, 110 mm wide, and 60 mm deep.

The thermoformed containers were examined for appearance and thickness uniformity. The thickness uniformity was rated as "A" according to the following criterion.

A : uniform appearance, without local thickness variation.
B : slightly uneven appearance, without local thickness variation.
C : slightly uneven appearance, with slight local thickness variation.
D : uneven appearance, with considerable local thickness variation.

The thermoformed containers were also examined for clarity. The transparency was rated as "A" according to the following criterion.

A : good transparency
B : poor transparency
C : considerable whitening

Using a coextrusion equipment (for 3 materials and 5 layers), the resin composition was formed into a multilayer sheet constructed of five layers of polypropylene resin, adhesive resin, EVOH resin composition, adhesive resin, and polypropylene resin, arranged in the order mentioned. The outer and inner polypropylene layers are 500 μm thick each, the adhesive resin layers are 50 μm thick each, and the EVOH resin composition layer is 50 μm thick. The polypropylene resin is "Noblen MA-6" made by Mitsubishi Chemical, and the adhesive resin is "Admer QF500" made by Mitsui Petrochemical Industries, Ltd.

The resulting multilayer sheet underwent vacuum forming under the following conditions.

Heating means: far infrared heater
Heating temperature: 160°C (sheet surface)
Pressure: 7 kg/cm$^2$
Mold: 75 mm in diameter and 75 mm deep
Plug: 45 mm in diameter and 65 mm long

The thermoformed containers were examined for appearance and cracking. The appearance and cracking were rated as "A" according to the following criterion.

Appearance:

A : even appearance
B : slightly uneven appearance
C : uneven appearance
D : greatly uneven appearance

Cracking:

A : no cracking
B : slight cracking
C : medium cracking
D : severe cracking

Using a coextrusion equipment (for 3 materials and 5 layers), the resin composition was formed into a multilayer film constructed of five layers of EVA resin, adhesive resin, EVOH resin composition, adhesive resin, and EVA resin, arranged in the order mentioned. The outer and inner EVA resin layers are 40 μm thick each, the adhesive resin layers are 10 μm thick each, and the EVOH resin composition layer is 10 μm thick. The EVA resin is "Everflex P2505P" made by Mitsui DuPont Polychemical, and the adhesive resin is "Admer VF600" made by Mitsui Petrochemical Industries, Ltd.

The resulting multilayer film was used for skin packaging of slices of bacon using a skin packaging machine made by Multivac Co., Ltd. The resulting package was examined for appearance and shape of contents. The appearance and the shape of contents were rated as "A" according to the following criterion.

Appearance:

A : no folding wrinkles
B : small folding wrinkles
C : medium folding wrinkles
D : large folding wrinkles

Shape of contents:

A : content not crushed
B : Content slightly crushed
C : Content crushed
D : Content considerably crushed

Table 2 shows the components of the resin composition and Table 3 shows the results of the evaluation of the multilayer film.

Examples 10 to 15

The same procedure as in Example 9 was repeated except that the components of the resin composition were changed as follows. Table 2 shows the components of the resin composition and Table 3 shows the results of the evaluation of the samples. Incidentally, Example 12 does not cover the test on thermoforming sheet.

[Example 10]

Component (A): 85 parts by weight of EVOH containing phosphoric acid (7 ppm in terms of phosphate radicals), sodium acetate (8 ppm in terms of sodium ions), and 32 mol% of ethylene content, characterized by a degree of saponification of 99.7% and a melt index of 6.4 g/10 min (measured at 190° C under a load of 2160 g).
Component (B): 15 parts by weight of the same nylon 6/12 as used in Example 9.
Component (C): 4 parts by weight of the same GML as used in Example 9.

[Example 11]

Component (A): 80 parts by weight of the same EVOH as used in Example 9.
Component (B): 20 parts by weight of the same nylon 6/12 as used in Example 9.
Component (C): 4 parts by weight of the same GML as used in Example 9.

[Example 12]

Component (A): 70 parts by weight of the same EVOH as used in Example 9.

Component (B): 30 parts by weight of the same nylon 6/12 as used in Example 9.
Component (C): 5 parts by weight of diethyl phthalate (DEP, having an SP value of 11.1, made by Kyowa Hakko Kogyo Co., Ltd.)

[Example 13]

Component (A): 85 parts by weight of EVOH containing phosphoric acid (70 ppm in terms of phosphate radicals), sodium acetate (130 ppm in terms of sodium ions), and 44 mol% of ethylene content, characterized by a degree of saponification of 99.7% and a melt index of 5.5 g/10 min (measured at 190° C under a load of 2160 g).
Component (B): 15 parts by weight of nylon 6/12 (composed of comonomers in a weight ratio of 50/50), "Grilon CF6S" made by EMS.
Component (C): 4 parts by weight of tetraglycerin monolaurate (TGML, having an SP value of 12, "SY Glystar ML-300" made by Sakamoto Yakuhin).

[Example 14]

Component (A): 85 parts by weight of the same EVOH as used in Example 13.
Component (B): 15 parts by weight of nylon 6 ("Amiran CM100" made by Toray Industries, Inc.)
Component (C): 4 parts by weight of the same TGML used in Example 13

[Example 15]

Component (A): 70 parts by weight of the same EVOH as used in Example 13.
Component (B): 30 parts by weight of the same nylon as used in Example 14.
Component (C): 5 parts by weight of the same DEP as used in Example 12.

Comparative Examples 11 to 15

The same procedure as in Example 9 was repeated except that the components of the resin composition were changed as follows. Table 2 shows the components of the resin composition and Table 3 shows the results of the evaluation of the samples. Incidentally, Comparative Example 15 does not cover the test on thermoforming sheet, and Comparative Examples 12 and 13 do not cover the on thermoforming sheet and skin package.

[Comparatiye Example 11]

Component (A): 100 parts by weight of the same EVOH as used in Example 9.
Component (B): not used.
Component (C): not used.

[Comparative Example 12]

Component (A): 80 parts by weight of the same EVOH as used in Example 9.
Component (B): 20 parts by weight of the same nylon 6/12 as used in Example 9.
Component (C): not used.

[Comparative Example 13]

Component (A): 80 parts by weight of the same EVOH as used in Example 9.
Component (B): 20 parts by weight of the same nylon 6/12 as used in Example 13.
Component (C): 5 parts by weight of glycerin tristearate (GTS, having an SP value of 9.1, "Rikemal S-95" made by Riken Vitamin).

[Comparative Example 14]

Component (A): 100 parts by weight of the same EVOH as used in Example 13.
Component (B): not used.
Component (C): not used.

[Comparative Example 15]

Component (A): 80 parts by weight of the same EVOH as used in Example 13.
Component (B): 20 parts by weight of the same nylon 6/12 as used in Example 9.
Component (C): 5 parts by weight of glycerin (GLR, having an SP value of 16.4, made by Nippon Oil and Fats Co., Ltd.)

[Table 2]

[Table 3]

The resin composition of the present invention is superior in heat stretchability, is not liable to the occurrence of cracking and local thickness variation during heat stretching process, and is also superior in gas barrier properties.

Table 1

| | | EVOH (A) | | | | | Polyamide resin (B) | | Compound (C) | | | Properties of compound | | Stretchability | Heat shrinkability | | Oxygen permeability |
|---|---|---|---|---|---|---|---|---|---|---|---|---|---|---|---|---|---|
| | | Ethylene content CH(A) mol% | Amount added (pbw) | PO₄ ions Content (ppm) | Metal ions Species | Metal ions Content (ppm) | Grade | Amount added (pbw) | Grade *4 | Amount added (pbw) | SP value SP(C) | $(CH(A))^{1/2}$ +SP(C) | MI | Appearance after stretching | Shrink-age (%) | Appear-ance | at 20°C, 100 %RH (*5) |
| Example | 1 | 48 | 85 | 90 | Na | 80 | Ny 6/12 *2 | 15 | TGML | 4 | 12 | 18.9 | 7.5 | A | 51 | A | 80 |
| | 2 | 48 | 85 | 3 | Na | 120 | Ny 6/12 *2 | 15 | TGML | 4 | 12 | 18.9 | 7.5 | B | 49 | A | 80 |
| | 3 | 48 | 85 | 80 | Na | 5 | Ny 6/12 *2 | 15 | TGML | 4 | 12 | 18.9 | 7.5 | B | 49 | A | 80 |
| | 4*6 | 48 | 85 | 3 | Na | 5 | Ny 6/12 *2 | 15 | TGML | 4 | 12 | 18.9 | 7.5 | C | 46 | B | 80 |
| | 5 | 48 | 80 | 90 | Na | 80 | Ny 6/12 *2 | 20 | GML | 5 | 10.9 | 17.8 | 8 | A | 51 | A | 87 |
| | 6 | 48 | 85 | 90 | Na | 80 | Ny 6 | 15 | TGML | 4 | 12 | 18.9 | 7 | B | 49 | A | 100 |
| | 7 | 44 | 80 | 90 | Na | 80 | Ny 6/12 *3 | 20 | GML | 5 | 10.9 | 17.5 | 6 | B | 55 | A | 83 |
| | 8 | 38 | 70 | 90 | Na | 80 | Ny 6 | 30 | GMS | 5 | 10.3 | 16.5 | 2.2 | A | 56 | A | 105 |
| Comparative Example | 1 | 48 | 100 | 90 | Na | 80 | - | - | - | - | - | - | 6.5 | E | - | - | - |
| | 2 | 44 | 80 | 90 | Na | 80 | Ny 6/12 *2 | 20 | - | - | - | - | 6 | E | - | - | - |
| | 3 | 48 | 98 | 90 | Na | 80 | Ny 6 | 2 | DEP | 5 | 11.1 | 18 | 6.8 | E | - | - | - |
| | 4 | 44 | 50 | 90 | Na | 80 | Ny 6 | 50 | GML | 5 | 10.9 | 17.8 | 6.5 | A | 55 | A | 180 |
| | 5 | 47.2*1 | 100 | 90 | Na | 80 | - | - | GMS | 5 | 10.3 | 17.2 | 5 | E | - | - | - |
| | 6 | 46*1 | 100 | 90 | Na | 80 | - | - | GMS | 5 | 10.3 | 17.1 | 4.8 | D | 43 | C | 110 |
| | 7 | 48 | 80 | 90 | Na | 80 | Ny 6/12 *2 | 20 | GLR | 5 | 16.4 | 23.3 | 5.8 | A | 49 | A | 215 |
| | 8 | 32 | 80 | 90 | Na | 80 | Ny 6/12 *3 | 20 | GTS | 5 | 9.1 | 14.8 | 2.1 | E | - | - | - |
| | 9 | 38 | 100 | 90 | Na | 80 | - | - | DEP | 5 | 11.1 | 17.3 | 2 | E | - | - | - |
| | 10 | 47.2*1 | 98 | 90 | Na | 80 | Ny 6 | 2 | GMS | 5 | 10.3 | 17.1 | 5.2 | E | - | - | - |

*1)  a mixture of two kinds of EVOH
*2)  Nylon 6/12 composed of comonomers in a weight ratio of 50/50.
*3)  Nylon 6/12 composed of comonomers in a weight ratio of 90/10.
*4)  Grades of plasticizers
    TGML : tetraglycerin monolaurate,  GMS : glycerin monostearate,  DEP : diethyl phthalate
    GML : glycerin monolaurate,  GLR : glycerin,  GTS : glycerin tristearate.
*5)  $cc/m^2 \cdot day \cdot atm$
*6)  reference example

Table 2

| | | EVOH (A) | | | | | Polyamide resin (B) | | Compound (C) | | | Properties of compound |
| | | Ethylene content CH(A) mol% | Amount added (pbw) | PO₄ Ions Content (ppm) | Metal Ions Species | Metal Ions Content (ppm) | Grade | Amount added (pbw) | Grade *3 | Amount added (pbw) | SP value SP(C) | $(CH(A))^{1/2} + SP(C)$ |
|---|---|---|---|---|---|---|---|---|---|---|---|---|
| Example | 9 | 32 | 85 | 70 | Na | 130 | Ny 6/12 *2 | 15 | GML | 4 | 10.9 | 16.6 |
| | 10 | 32 | 85 | 7 | Na | 8 | Ny 6/12 *2 | 15 | GML | 4 | 10.9 | 16.6 |
| | 11 | 32 | 80 | 70 | Na | 130 | Ny 6/12 *2 | 20 | GML | 4 | 10.9 | 16.6 |
| | 12 | 32 | 70 | 70 | Na | 130 | Ny 6/12 *2 | 30 | DEP | 5 | 11.1 | 16.8 |
| | 13 | 44 | 85 | 70 | Na | 130 | Ny 6/12 *1 | 15 | TGML | 4 | 12 | 18.6 |
| | 14 | 44 | 85 | 70 | Na | 130 | Ny 6 | 15 | TGML | 4 | 12 | 18.6 |
| | 15 | 44 | 70 | 70 | Na | 130 | Ny 6 | 30 | DEP | 5 | 11.1 | 17.7 |
| Comparative Example | 11 | 32 | 100 | 70 | Na | 130 | - | - | - | - | - | - |
| | 12 | 32 | 80 | 70 | Na | 130 | Ny 6/12 *2 | 20 | - | - | - | - |
| | 13 | 32 | 80 | 70 | Na | 130 | Ny 6/12 *1 | 20 | GTS | 5 | 9.1 | 14.8 |
| | 14 | 44 | 100 | 70 | Na | 130 | - | - | - | - | - | - |
| | 15 | 44 | 80 | 70 | Na | 130 | Ny 6/12 *2 | 20 | GLR | 5 | 16.4 | 23.0 |

*1) Nylon 6/12 composed of comonomers in a molar weight of 50/50.
*2) Nylon 6/12 composed of comonomers in a molar weight of 90/10.
*3) Grades of plasticizers
 TGML : tetraglycerin monolaurate, DEP : diethyl phthalate
 GML : glycerin monolaurate, GLR : glycerin, GTS : glycerin tristearate.

Table 3

| | Oxygen permeability | Thermoformability (film) | | Thermoformability (sheet) | | Skin pack properties | |
|---|---|---|---|---|---|---|---|
| | at 20°C, 65 %RH (*1) | Unevenness and thickness variation | Transparency | Unevenness | Cracking | Folding wrinkles | Crushed content |
| Example 9 | 0.6 | A | A | A | A | A | A |
| Example 10 | 0.6 | A | A | B | A | B | B |
| Example 11 | 0.8 | A | A | - | - | A | B |
| Example 12 | 1.0 | A | A | A | A | A | A |
| Example 13 | 2.3 | A | A | A | A | A | A |
| Example 14 | 2.3 | A | A | B | A | A | B |
| Example 15 | 2.5 | A | A | A | A | A | A |
| Comparative Example 11 | 1.7 | D | B | D | C | D | D |
| Comparative Example 12 | 1.0 | B | A | - | - | - | - |
| Comparative Example 13 | 0.6 | B | C | - | - | - | - |
| Comparative Example 14 | 1.5 | C | B | C | D | C | C |
| Comparative Example 15 | 9.2 | A | A | - | - | A | A |

*1) cc/m$^2$·day·atm

EP 0 814 125 B1

**Claims**

1. A resin composition which comprises

   (A) 55-97 parts by weight of an ethylene-vinyl alcohol copolymer having an ethylene content of 20 to 70 mole %, which contains a phosphate compound in an amount of 5 to 500 ppm (in terms of phosphate radical) and/or an alkali metal salt or an alkaline earth metal salt in an amount of 10 to 500 ppm (in terms of metal ions);
   (B) 3 to 45 parts by weight of a polyamide resin, and
   (C) 0.1 to 30 parts by weight of at least one hydrophobic plasticizer selected from aromatic ester, aliphatic ester and an epoxy compound and which satisfies the condition specified by equation (1) below,

   wherein the amounts of (A), (B) and (C) are on the basis of 100 parts by weight of the total amount of components (A) and (B),
   wherein

$$15 \leq \{CH(A)\}^{1/2} + SP(C) \leq 22 \qquad (1)$$

   wherein CH(A) denotes the ethylene content (mole %) in the ethylene-vinyl alcohol copolymer as component (A), and SP(C) denotes the solubility parameter of the hydrophobic plasticizer as component (C) which is calculated from the Fedors equation.

2. The resin composition according to claim 1, wherein the polyamide resin (B) is one in which the ratio of $CH_2/NHCO$ (wherein $CH_2$ is the number of $CH_2$ groups and NHCO is the number of NHCO groups) satisfies the condition specified by equation (2)

$$4 \leq CH_2/NHCO \leq 8 \qquad (2)$$

3. The resin composition according to claim 1 or 2, wherein the polyamide resin (B) is nylon 6/12.

**Patentansprüche**

1. Harzzusammensetzung, umfassend:

   (A) 55 bis 97 Gewichtsteile eines Ethylen-Vinyl-Alkoholcopolymers mit einem Ethylengehalt von 20 bis 70 Mol%, welches eine Phosphatverbindung in einer Menge von 5 bis 500 ppm (bezüglich der Phosphatgruppe) und/oder ein Alkalimetallsalz oder ein Erdalkalimetallsalz in einer Menge von 10 bis 500 ppm (bezüglich der Metallionen) enthält;
   (B) 3 bis 45 Gewichtsteile eines Polyamidharzes, und
   (C) 0,1 bis 30 Gewichtsteile von mindestens einem hydrophoben Weichmacher, ausgewählt aus einem aromatischen Ester, einem aliphatischen Ester und einer Epoxyverbindung, und welcher die Bedingung, dargelegt durch die untenstehende Gleichung (1), erfüllt,

   wobei die Mengen von (A), (B) und (C) auf der Basis von 100 Gewichtsteilen der Gesamtmenge der Komponenten (A) und (B) sind,
   wobei

$$15 \leq \{CH(A)\}^{1/2} + SP(C) \leq 22 \qquad (1)$$

   sind,
   wobei CH(A) den Ethylengehalt (Mol%) in dem Ethylen-Vinyl-Alkoholcopolymer als Komponente (A) bezeichnet, und SP(C) den Löslichkeitsparameter des hydrophoben Weichmachers als Komponente (C) bezeichnet, welcher aus der Fedors-Gleichung berechnet wird.

2. Harzzusammensetzung gemäß Anspruch 1, wobei das Polyamidharz (B) eines ist, bei welchem das Verhältnis von $CH_2$/NHCO (wobei $CH_2$ die Zahl der $CH_2$-Gruppen und NHCO die Zahl der NHCO-Gruppen darstellt) die Bedingung, dargelegt durch Gleichung (2), erfüllt

$$4 \leq CH_2/NHCO \leq 8 \tag{2}$$

3. Harzzusammensetzung gemäß Anspruch 1 oder 2, wobei das Polyamidharz (B) Nylon 6/12 ist.

**Revendications**

1. Composition de résine qui comprend

(A) 55-97 parties en poids d'un copolymère d'éthylène-alcool vinylique ayant une teneur en éthylène de 20 à 70% en mole, qui contient un composé de phosphate dans une quantité de 5 à 500 ppm (en termes de radical phosphate) et/ou un sel de métal alcalin ou un sel de métal alcalino-terreux dans une quantité de 10 à 500 ppm (en termes d'ions métalliques) ;
(B) 3 à 45 parties en poids d'une résine de polyamide, et
(C) 0,1 à 30 parties en poids d'au moins un plastifiant hydrophobe choisi parmi un ester aromatique, un ester aliphatique et un composé époxy et qui satisfait la condition spécifiée par l'équation (1) ci-dessous,

dans laquelle les quantités de (A), (B) et (C) sont données par rapport à 100 parties en poids de la quantité totale des composants (A) et (B),
dans laquelle

$$15 \leq \{CH(A)\}^{1/2} + SP(C) \leq 22 \tag{1}$$

dans laquelle CH(A) désigne la teneur en éthylène (% en mole) dans le copolymère d'éthylène-alcool vinylique comme composant (A), et SP(C) désigne le paramètre de solubilité du plastifiant hydrophobe comme composant (C) qui est calculé à partir de l'équation de Fedors.

2. Composition de résine selon la revendication 1, dans laquelle la résine de polyamide (B) est une résine dans laquelle le rapport de $CH_2$/NHCO (où $CH_2$ est le nombre de groupements $CH_2$ et NHCO est le nombre de groupements NHCO) satisfait la condition spécifiée par l'équation (2)

$$4 \leq CH_2/NHCO \leq 8 \tag{2}$$

3. Composition de résine selon la revendication 1 ou 2, dans laquelle la résine de polyamide (B) est le Nylon 6/12.